# EUROPÄISCHE PATENTSCHRIFT

(11) **EP 1 532 372 B1**
(45) Veröffentlichungstag und Bekanntmachung des Hinweises auf die Patenterteilung: **20.02.2008**
(21) Anmeldenummer: 03720127.4
(22) Anmeldetag: 24.02.2003
(51) Int. Cl.: F16B 35/04, F16B 5/00

(54) **BEFESTIGUNGSANORDNUNG**
FIXING ARRANGEMENT
DISPOSITIF DE FIXATION

(30) Priorität: 22.08.2002 DE 10238528
(43) Veröffentlichungstag der Anmeldung: 25.05.2005
(73) Patentinhaber: ROBERT BOSCH GMBH, 70442 Stuttgart (DE)
(72) Erfinder: FINK, Andreas, 72800 Eningen U.A. (DE); WOERNLE, Wolfgang, 72149 Neustetten (DE)
(86) Internationale Anmeldenummer: PCT/DE2003/000564
(87) Internationale Veröffentlichungsnummer: WO 2004/020844

(56) Entgegenhaltungen:
- EP-A- 0 747 604
- EP-A- 0 898 087
- FR-A- 2 613 001
- US-A- 3 208 328

## Beschreibung

### Stand der Technik

Die Erfindung geht aus von einer Befestigungsanordnung nach der Gattung des unabhängigen Patentanspruchs.

Aus der Patentschrift EP 898 087 B1 ist eine Befestigungsanordnung mit einem Schlüssellochprinzip bekannt, wobei eine Schraube, die zur Befestigung verwendet wird, Angriffsflächen an beiden Enden für ein Werkzeug hat. Durch diese außergewöhnliche Schraube ist es möglich, dass die Befestigungsvorrichtung von beiden Enden her festgeklemmt,werden kann.

Die Patentschrift EP 747 604 A1 offenbart eine alternative Befestigungsanordnung.

Nachteilig an der in EP 898 087 B1 vorgestellten Lösung ist, dass diese außergewöhnliche Schraube zur Befestigung notwendig ist.

Aufgabe der Erfindung ist es daher, eine Befestigungsanordnung zu schaffen, die diese Schraube vermeidet.

### Vorteile der Erfindung

Die erfindungsgemäße Befestigungsanordnung mit den Merkmalen des unabhängigen Patentanspruchs hat demgegenüber den Vorteil, dass nun ein runder Kopf mit einer glatten Oberfläche an der Schraube angeordnet ist und somit eine einfachere Schraube bzw. eine alternative Befestigungsanordnung möglich ist. Diese Schraube ist insbesondere günstiger herzustellen, da einerseits die Angriffsfläche für das Werkzeug entfällt und somit weniger Arbeitsschritte notwendig sind, um die Schraube herzustellen, und der Kopf kann auch dünner ausgeführt werden, als es bei einem Kopf mit einer Angriffsfläche notwendig wäre. Dies spart Material und damit ebenfalls Kosten. Der Einschraubprozess zur Vormontage dieser Schraube mit nur einer Angriffsfläche gegenüber der Schraube mit zwei Angriffsflächen ist kostenneutral, so dass hierdurch der Kostenvorteil durch die einfachere Schraube nicht reduziert wird.

Weiterhin ist die Schraube selbstsichernd ausgeführt. Dies dient dazu, um die Schraube nach dem Vormontieren auf Position zu halten. Der Schraubenkopf hat dann einen vorgegebenen Abstand zum Gehäuse, der das Einhängen in das Schlüsselloch ermöglicht. Beim anschließenden Anschrauben wird die Selbstsicherung überwunden und die Schraube auf Anschlag festgeschraubt. Die Selbstsicherung ist als Fleckbeschichtung ausgeführt, wobei als Material für die Beschichtung Polyamid verwendet ist.

Durch die in den abhängigen Ansprüchen aufgeführten Maßnahmen und Weiterbildungen sind vorteilhafte Verbesserungen der im unabhängigen Patentanspruch angegebenen Befestigungsanordnung möglich.

Besonders vorteilhaft ist, dass die Angriffsfläche am Schraubenende als spezifische Außenverzahnung, beispielsweise TORX, oder als Außenvielkant, beispielsweise Inbus, ausgebildet ist. TORX bezeichnet eine sternförmige Verzahnung. Inbus ist eine übliche Bezeichnung für einen Sechskant. Alternativ ist es auch möglich, einen Innenvielrund oder -vielkant zu verwenden. Diese Konzepte ermöglichen ein präzises Einschrauben. Dabei ist es insbesondere von Vorteil, dass ein Linksgewinde verwendet wird. Dies ist von Vorteil, da in der Automobilindustrie in der Regel rechtsdrehende Werkzeuge verwendet werden. Das Anschrauben erfolgt auf der Seite der Außenverzahnung bzw. des Außenvielkants, so dass in diesem Fall eine Rechtsdrehung des Werkzeugs ein Anschrauben bewirkt.

Darüber hinaus ist es von Vorteil, dass die erfindungsgemäße Befestigungsanordnung sowohl einen Rotationsschutz als auch einen Translationsschutz aufweist. Dies erleichtert zum einen die Montage der erfindungsgemäßen Befestigungsanordnung und zum anderen sichert es das am zweiten Bauteil befestigte erste Bauteil gegen rotatorische oder translatorische Bewegungen, so dass das erste Bauteil, beispielsweise das Sensorgehäuse, immer in der richtigen Position im Schlüsselloch verbleibt. Dies wird durch Vorsprünge realisiert, die, wenn die Bauteile einmal durch das Schlüsselloch zusammengebaut wurden, gegen rotatorische und translatorische Bewegungen sperren. Dabei sind die Vorsprünge so im Gehäuse vorgesehen, dass sie passgenau in das Schlüsselloch hineinragen und damit eine Bewegung verhindern. Es ist auch möglich, dass die Vorsprünge so gestaltet sind, dass ein nur geringes Spiel des ersten Bauteils möglich ist. Dies ist insbesondere auch beim Befestigen von Vorteil, um diesen Arbeitsschritt einfacher zu gestalten.

### Zeichnung

Ausführungsbeispiele der Erfindung sind in der Zeichnung dargestellt und werden in der nachfolgenden Beschreibung näher erläutert.

Es zeigen
Figur 1 ein erstes Bauteil der erfindungsgemäßen Befestigungsanordnung mit Schraube,
Figur 2 die Befestigungsanordnung im zusammengebauten Zustand,
Figur 3 das zweite Bauteil der erfindungsgemäßen Befestigungsanordnung in einer Aufsicht,
Figur 4 eine Seit- und Rückansicht der erfindungsgemäßen Befestigungsanordnung,
Figur 5 eine Ansicht der Schraube der erfindungsgemäßen Befestigungsanordnung und
Figur 6 eine Seitenansicht der Schraube als technische Zeichnung.

### Beschreibung

Bauteile, insbesondere Sensoren, beispielsweise für Rückhaltesysteme, werden in der Automobilindustrie auf unterschiedliche Weise am Fahrzeug befestigt. Neben dem Anschrauben an eine in der Karosserie eingeschweißte Mutter oder Anschrauben mittels einer Schraube durch eine Bohrung in der Karosserie in eine Gewindebuchse des Bauteils wird zunehmend das Schlüssellochprinzip zur Befestigung von Gehäusen verwendet. Hierbei werden einem Gehäuse des anzubringenden Bauteils auf Position selbstsichernd vormontierte Schrauben mit dem Kopf in den größeren Teil eines schlüssellochartigen Ausschnittes in der Karosserie des Fahrzeugs eingeführt und dann im unteren schmäleren Teil, also einer weiteren Öffnung des Schlüssellochs, eingehängt. Danach wird die Schraube angezogen und das Bauteil dadurch festgeklemmt.

Das Schlüssellochprinzip hat gegenüber den beiden anderen oben erwähnten Methoden den Vorteil, dass einerseits keine eingeschweißte oder anderweitig vormontierte Mutter im Fahrzeug notwendig ist, was einen erheblichen Kostenvorteil darstellt. Andererseits ist, wie im Fall des Durchschraubens mit einer Schraube beim Schlüssellochprinzip, kein Zugang von beiden Seiten des Anschraubpunktes notwendig. Beispielsweise ist hierdurch das Einhängen und Anschrauben eines Sensors an eine hohle B-Säule möglich, die von außen nicht mehr zugänglich ist, was die Wahl des Anschraubortes flexibler gestaltet.

Erfindungsgemäß wird nun eine Befestigungsanordnung vorgesehen, die eine Schraube aufweist, deren Kopf rund ist und eine glatte Oberfläche aufweist. Am Ende des Schraubenschafts weist diese Schraube Angriffsflächen für ein Werkzeug auf, vorzugsweise eine Außenverzahnung oder einen Außenvielkant. Die Schraube besitzt dabei einen runden Kopf variabler Dicke, der keine Angriffsfläche für ein Werkzeug hat. Danach schließt sich der Schraubenschaft an, an dessen Ende sich eine Angriffsfläche für ein Werkzeug befindet. Der Schraubenschaft besitzt selbst über ein Teilstück oder die gesamte Länge ein Gewinde zum Einschrauben in eine passende Buchse des Gehäuses des anzuschraubenden Bauteiles. Vorzugsweise wird hierbei ein Linksgewinde verwendet, da in der Automobilindustrie in der Regel rechtsdrehende Werkzeuge verwendet werden. Das Anschrauben erfolgt auf der Seite der Außenverzahnung oder des Außenvielkants, so dass in diesem Fall eine Rechtsdrehung des Werkzeugs ein Anschrauben bewirkt. Des Weiteren ist die Schraube selbstsichernd ausgeführt. Dies dient dazu, um die Schraube nach dem Vormontieren auf Position zu halten. Der Schraubenkopf hat dann einen vorgegebenen Abstand zum Gehäuse, der das Einhängen in das Schlüsselloch ermöglicht. Beim anschließenden Anschrauben wird die Selbstsicherung überwunden und die Schraube auf Anschlag festgeschraubt. Die Selbstsicherung ist durch eine Beschichtung in einem Teilbereich oder dem gesamten Bereich des Gewindes realisiert. Bei der Beschichtung handelt es sich um eine sogenannte klemmende Beschichtung, wie beispielsweise in der DIN267 Teil 28 beschrieben. Die Beschichtung ist aus Kunststoff, der beim Einschrauben eine Klemmwirkung hervorruft. Die klemmende Beschichtung ist als Fleckbeschichtung ausgeführt. Sie kann das Losdrehen der Verbindung nicht aufhalten, sie verhindert jedoch ein vollständiges Lösen. Als Material für die Beschichtung ist Polyamid verwendet.

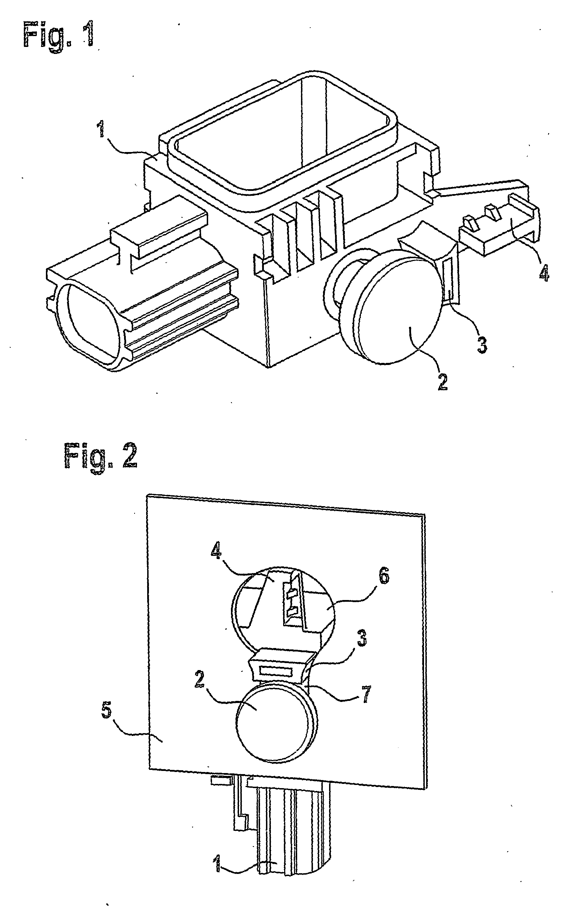

Figur 1 zeigt die Ansicht eines Teils der erfindungsgemäßen Befestigungsanordnung. Es wird hier ein Gehäuse 1 eines Sensors, hier eines Seitenaufprallsensors, als erstes Bauteil dargestellt, aus dem ein Kopf 2 einer Schraube herausragt, über den ein Rotationsschutz 3 angeordnet ist, wobei das Gehäuse zusätzlich einen Translationsschutz 4 aufweist. Der Rotationsschutz und der Translationsschutz sind als entsprechend geformte Vorsprünge ausgebildet, die im befestigten Zustand eine Drehung bzw. ein Verschieben des Gehäuses 1 verhindern.

Das Gehäuse 1 weist Aufnahmen für die Elektronik auf, Rippungen zur Versteifung und zur mechanischen Identifikation in der Fertigungslinie, wobei der Translationsschutz 4 als ein Steg ausgebildet ist, der gegen einen Rand des Ausschnittes des Schlüssellochs drücken wird, um eine Translationsbewegung zu vermeiden. Dieser Steg 4 drückt gegen das entgegengesetzte Ende des Ausschnitts im Vergleich zur Schraube, die mit dem Kopf 2 die kleinere Öffnung des Schlüssellochs hintergreift. D.h. der Steg 4 drückt gegen den Rand der größeren Öffnung, durch die der Kopf 2 hindurchführbar ist. Hier weist der Steg 4 eine abgerundete Oberfläche auf, die gegen den Rand des Ausschnittes drücken wird. Der Rotationsschutz 3 ist derart geformt, dass er an der Schnittstelle zwischen der großen und der kleinen Öffnung des Schlüssellochs sich einklemmt, um eine Rotation des Gehäuses 1, wenn das Gehäuse 1 in das Schlüsselloch eingeführt und festgeklemmt wurde, zu vermeiden. Das Gehäuse 1 ist beispielsweise aus Metall und/der Kunststoff hergestellt worden. Der Kopf 2 der Schraube ist, wie hier dargestellt, rund ausgebildet und weist eine glatte Oberfläche auf. Lediglich die Schraubrichtung und eine Kennzeichnung kann auf dem Kopf 2 angebracht sein.

Figur 2 zeigt nun das Gehäuse 1, wie es in einem Schlüsselloch, das als Ausschnitt in ein Blech 5 ausgeschnitten ist, befestigt wurde. Das Schlüsselloch weist eine größere Öffnung 6 auf, durch die der Kopf 2 hindurchführbar ist. Zur Befestigung wird dann das Gehäuse 1 mit dem Kopf 2 nach unten geführt, um den Kopf 2 in die kleinere Öffnung 7 einzuführen, da der Kopf 2 diese kleinere Öffnung 7 durch seine Größe hintergreift, so dass hier eine Klemmung durch das Anschrauben der Schraube möglich wird. Die Öffnungen 6 und 7 gehen also ineinander über, sie sind nicht voneinander getrennt.

Hier ist auch dargestellt, wie der Rotationsschutz 3 die Klemmung an der Schnittstelle zwischen der großen Öffnung 6 und der kleinen Öffnung 7 erreicht und der Translationsschutz 4 gegen den Rand, und zwar genau entgegengesetzt zur Schraube 2, drückt, um translatorische Bewegungen in Längsrichtung des Schlüssellochs zu vermeiden.

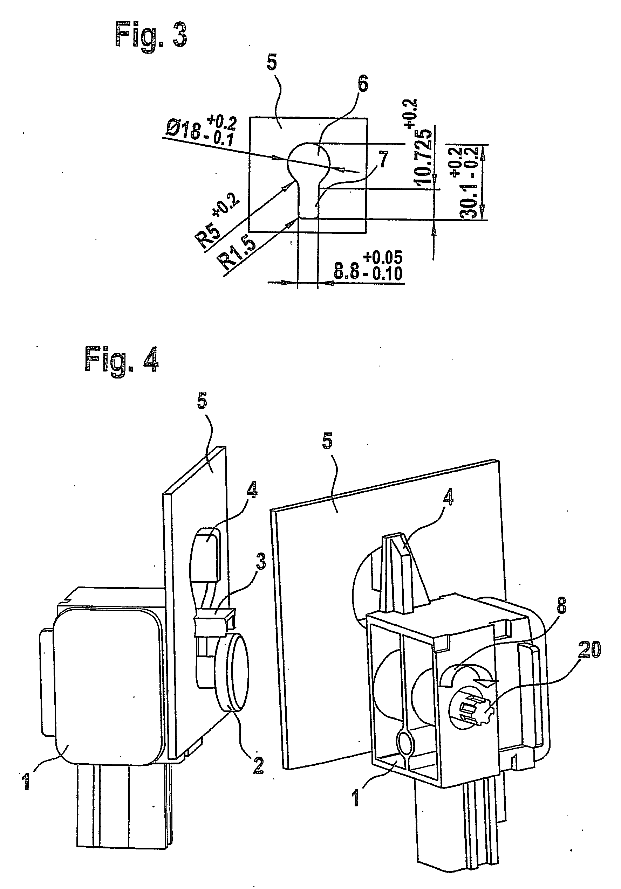

In Figur 3 wird in einer Aufsicht das Blech 5, das Teil einer Karosserie sein kann, mit dem Schlüsselloch, und zwar der großen Öffnung 6 und der kleinen Öffnung 7, dargestellt. Typische Bemaßungen sind hier beispielhaft angegeben. Die obere Öffnung 6 ist im Wesentlichen kreisrund ausgebildet, während die untere Öffnung 7 als ein rechteckiger Ausschnitt ausgebildet ist. Alternativ ist es möglich, dass die Öffnungen 6 und 7 auch sechseckig oder elliptisch geformt sein können.

Die Breite des rechteckigen Ausschnitts 7 ist so, dass der Schraubkopf diese Öffnung hintergreifen kann. Der Durchmesser der größeren Öffnung 6 ist jedoch so bemessen, dass der Kopf 2 durch sie hindurchgeführt werden kann. Dies ermöglicht dann eine einfache Montage des Gehäuses 1, beispielsweise eines Sensorgehäuses, in der Fertigung bei einem Automobilhersteller.

Figur 4 zeigt die Seitansicht und eine Rückansicht des befestigten Gehäuses 1. In der Seitenansicht ist das Gehäuse 1 mit einem Deckel versehen und an das Blech 5 mit der Schlüssellochöffnung durch die Schraube 2 angeschraubt. Zusätzlich sind der Translationsschutz 4 und der Rotationsschutz 3 durch das Schlüsselloch hindurchragend dargestellt. In der Rückansicht ist am Gehäuse ein Außen-TORX 20 als Angriffsfläche für ein Werkzeug dargestellt, um die Schraube von hinten so festzuziehen, dass sie gegen das Blech 5 eine Klemmung verursacht. Hier ist auch eine Rückansicht des Translationsschutzes 4 dargestellt, der durch eine Rippung verstärkt ist. Die Drehrichtung des Außen-TORX 20 beschreibt hier eine Rechtsdrehung. Diese Drehung wird mit dem Bezugszeichen 8 beschrieben. Es ist möglich, anstatt des Außen-TORX auch andere Außenverzahnungen oder Außenvielkantformen zu wählen.

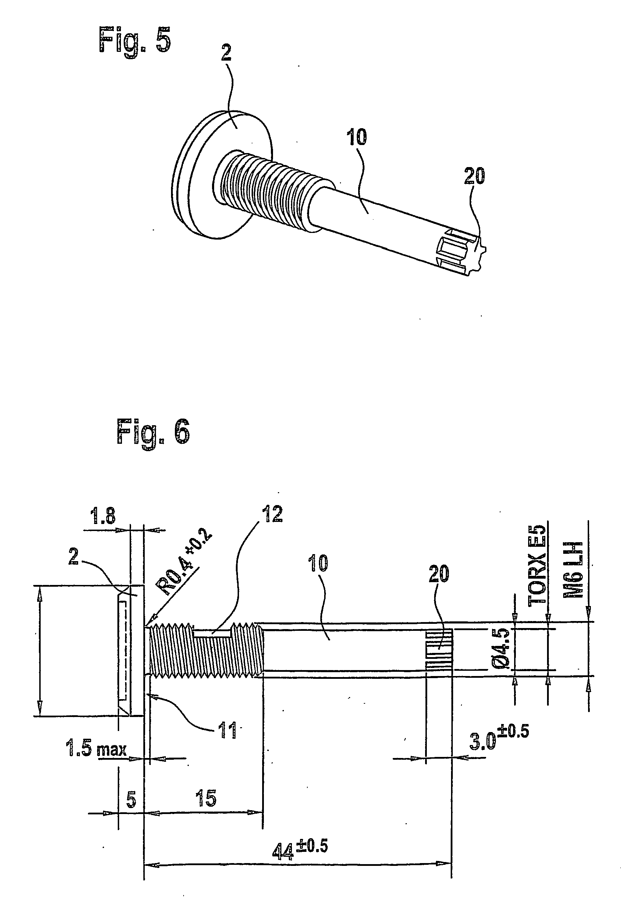

Figur 5 zeigt eine Darstellung der Schraube, die zur erfindungsgemäßen Befestigungsanordnung gehört. Die Schraube weist den Außen-TORX 20 auf und den runden Kopf 2. Darüber hinaus weist die Schraube einen Schraubenschaft 10 auf, der in einem vorgegebenen Bereich ein Gewinde aufweist. Das Gewinde kann den ganzen Schraubenschaft 10 umfassen. Hier ist der Bereich, der etwas dünner dargestellt ist, frei von einem Gewinde. Dies hat den Vorteil, dass man bei der Vormontage der Schraube nur ein kurzes Gewindestück in die Buchse einschrauben muss. Den glatten Teil des Schafts kann man einfach durch die Buchse hindurchführen. Dies spart Einschraubzeit und damit Kosten.

Figur 6 zeigt in einer Seitansicht die Schraube erneut. Der Außen-TORX 20 und das Gewinde sind hier dargestellt und mit typischen Bemaßungen gekennzeichnet. Zusätzlich weist der Gewindebereich 12 einen Bereich für eine klemmende Beschichtung zur Positionssicherung der Schraube auf. Dabei wird Polyamid verwendet.

Weiterhin ist es möglich, am Kopf 2 eine Sternverzahnung vorzusehen, die einen zusätzlichen Schutz gegen ein Loslösen der Schraube darstellt, nachdem die Schraube bei der Montage am Anschraubort auf Anschlag festgeschraubt wurde.

Die Befestigung der erfindungsgemäßen Befestigungsvorrichtung erfolgt nun so, dass zunächst die Schraube mit dem Kopf 2 in das Gehäuse 1 so eingeschraubt wird, dass der Kopf 2 noch ein gutes Stück herausragt. Dann wird der Kopf 2 durch die große Öffnung 6 des Schlüssellochs hindurchgeführt und die Anordnung 1 mit dem Kopf 2 translatorisch so bewegt, dass der Kopf 2 die Öffnung 7 hintergreift. Dann kann über die Außenverzahnung oder den Außenvielkant 20 die Befestigung des Gehäuses 1 am Blech 5 erfolgen. Wie oben dargestellt, weist die Schraube im Gewindebereich 12 eine Selbstsicherung durch eine Beschichtung auf, die durch das Anschrauben am Blech 5 überwunden wird. Die Selbstsicherung kann zusätzlich durch die Verwendung einer gewindeformenden Schraube realisiert sein.

## Patentansprüche

1. Befestigungsanordnung mit einem ersten Bauteil (1), das eine Gewindebuchse aufweist und einem zweiten Bauteil (5) mit einem schlüssellochähnlichen Ausschnitt (6, 7), und mit einer Schraube, die in die Gewindebuchse derart einschraubbar ist, dass die Schraube mit ihrem Kopf (2) durch die größere Öffnung (6) des Ausschnitts hindurchführbar ist und der Kopf (2) die kleinere Öffnung (7) des Ausschnitts zur Befestigung hintergreift, wobei die Schraube am Ende des Schraubenschafts (10), Angriffsflächen (20) für ein Werkzeug aufweist, **dadurch gekennzeichnet, dass** der Kopf (2) rund ist und eine glatte Oberfläche aufweist, dass die Schraube eine Selbstsicherung aufweist, dass die Selbstsicherung durch eine Beschichtung des Gewindes der Schraube erreicht ist und dass die Beschichtung als Fleckbeschichtung ausgeführt ist, wobei als Material für die Beschichtung Polyamid verwendet ist.

2. Befestigungsanordnung nach Anspruch 1, **dadurch gekennzeichnet, dass** die Angriffsflächen als eine Außenverzahnung oder als ein Außenvielkant (20) ausgebildet sind.

3. Befestigungsanordnung nach Anspruch 1 oder 2, **dadurch gekennzeichnet, dass** der Gewindeschaft der Schraube ein Linksgewinde aufweist.

4. Befestigungsanordnung nach Anspruch 1, **dadurch gekennzeichnet, dass** das Gewinde der Schraube selbst zur Selbstsicherung gewindeformend für eine entsprechende Buchse konfiguriert ist.

5. Befestigungsanordnung nach einem der vorhergehenden Ansprüche, **dadurch gekennzeichnet, dass** das erste Bauteil einen Translationsschutz (4) aufweist; der derart gestaltet ist, dass er eine translatorische Bewegung des ersten Bauteils (1) beim Befestigen verhindert.

6. Befestigungsanordnung nach einem der vorhergehenden Ansprüche, **dadurch gekennzeichnet, dass** das erste Bauteil (1) einen Rotationsschutz (3) aufweist, der derart gestaltet ist, dass er eine rotatorische Bewegung des ersten Bauteils (1) gegenüber dem zweiten Bauteil (5) beim Befestigen verhindert.

## Claims

1. Fastening arrangement having a first component (1) which has a threaded sleeve and having a second component (5) with a keyhole-shaped cutout (6, 7) and having a screw which can be screwed into the threaded sleeve in such a way that the screw can be passed with its head (2) through the relatively large opening (6) of the cutout and the head (2) engages behind the relatively small opening (7) of the cutout for fastening, with the screw having, on the end of the screw shank (10), engagement faces (20) for a tool, **characterized in that** the head (2) is round and has a smooth surface, **in that** the screw has a self-locking mechanism, **in that** the self-locking mechanism is obtained by means of a coating of the thread of the screw, and **in that** the coating is formed as a spot coating, with polyamide being used as the material for the coating.

2. Fastening arrangement according to Claim 1, **characterized in that** the engagement faces are formed as an external toothing or as an external polygon (20).

3. Fastening arrangement according to Claim 1 or 2, **characterized in that** the threaded shank of the screw has a left-hand thread.

4. Fastening arrangement according to Claim 1, **characterized in that** the thread of the screw is itself configured, for self-locking, so as to be thread-forming for a corresponding sleeve.

5. Fastening arrangement according to one of the preceding claims, **characterized in that** the first component has a translation prevention arrangement (4) which is designed so as to prevent a translatory movement of the first component (1) during fastening.

6. Fastening arrangement according to one of the preceding claims, **characterized in that** the first component (1) has a rotation prevention arrangement (3) which is designed so as to prevent a rotational movement of the first component (1) with respect to the second component (5) during fastening.

## Revendications

1. Dispositif de fixation comprenant un premier composant (1) ayant une douille filetée et un second composant (5) avec une découpe (6, 7) en forme de trous de serrure et une vis qui se loge dans la douille filetée en faisant passer la vis avec sa tête (2) à travers la plus grande ouverture (6) de la découpe pour que la tête (2) vienne prendre derrière la plus petite ouverture (7) de la découpe pour la fixation,
l'extrémité du corps (10) de la vis ayant des surfaces de prise (20) pour un outil,
**caractérisé en ce que**
la tête (2) est ronde et présente une surface supérieure lisse et la vis comporte un moyen d'autoblocage,
le moyen d'autoblocage est constitué par un revêtement du filet de la vis et
le revêtement est un revêtement sous forme de tache et la matière du revêtement est un polyamide.

2. Dispositif de fixation selon la revendication 1,
**caractérisé en ce que**
la surface de prise est une denture extérieure ou une surface à pans multiples (20).

3. Dispositif de fixation selon la revendication 1 ou 2,
**caractérisé en ce que**
la tige filetée de la vis a un filetage à gauche.

4. Dispositif de fixation selon la revendication 1,
**caractérisé en ce que**
le filetage de la vis est déformant pour l'autoblocage, pour une douille filetée correspondante.

5. Dispositif de fixation selon l'une des revendications précédentes,
**caractérisé en ce que**
la première partie comporte un moyen de protection (4) contre la translation réalisée pour éviter un mouvement de translation du premier composant une fois fixé.

6. Dispositif de fixation selon l'une quelconque des revendications précédentes,
**caractérisé en ce que**
le premier composant comporte un moyen de protection contre la rotation (3), ce moyen étant réalisé pour interdire un mouvement de rotation du premier composant (1) par rapport au premier composant (5) lors de la fixation.
